# EUROPEAN PATENT APPLICATION

(11) **EP 2 108 818 A2**
(43) Date of publication of application: **14.10.2009**
(21) Application number: 08254040.2
(22) Date of filing: 17.12.2008
(51) Int. Cl.: F03D 1/02, F03D 1/06

(54) **Wind turbine structure having a plurality of propellor-type rotors**

(30) Priority: 29.02.2008 HK 08102329; 24.04.2008 HK 08104604; 25.04.2008 HK 08104651; 14.07.2008 HK 08107704; 11.08.2008 HK 08108816
(71) Applicant: Hopewell Wind Power Limited, Tortola (VI)
(72) Inventor: Wu, Gordon Ying Sheung, Hong Kong (CN); Wu, Thomas Jefferson, Hong Kong (CN); Wu, Carol, Hong Kong (CN)
(74) Representative: Martin, David John

(57) **Abstract**

A wind turbine structure has a vertical core that supports multiple stages of rotor support frames and power generating units, each rotor support frame comprising an annular carousel rotatably located about the core and having at least two radially extending arms, and at least one pair of propeller-type rotors located respectively at distal ends of the radially extending arms. Each rotor support frame can rotate around the vertical core independently. Each rotor support frame further comprises a wind deflector.

## Description

### Field of the invention

The present invention relates to a wind turbine structure. More particularly, the invention relates to a vertical wind turbine structure having a plurality of stacking pairs of propeller-type rotors,

### Background of the invention

With the continuing increase in demand for energy, especially in developing countries, and a realization that traditional fossil fuel supplies are limited there is increasing interest in new and improved ways to harness renewable energy sources such as sunlight, wind, rain (water), tides and geothermal heat, which are naturally replenished. Hydro-electricity generation has been a mainstay of renewable energy for many decades. However, with greater importance being placed on the environmental impact of damming waterways and the realization that fresh drinking water is an important commodity hydro-generation schemes are becoming less desirable. Attention has now turned to wind as a source of future large scale electricity generation.

Horizontal-axis wind turbines comprise a tower with a horizontal-axis propeller-type rotor turning an electric generator. Hitherto the largest horizontal axis wind turbines are about the height of a 40-storey building with a rotor blade diameter of approximately 126 meters. In order to produce sufficient electricity for supply to a public electricity network, horizontal axis wind turbines are located in large wind farms that can comprise hundreds of wind turbines spread over a large area. Although they use an abounded renewable energy source these wind farms occupy large areas of land and are unsightly.

It is an object of the present invention to provide a wind turbine structure that can be made to a larger scale than wind turbines known hitherto in order to greater harness wind energy. It is another object of the present invention to provide a wind turbine structure that overcomes or at least ameliorates disadvantages with known wind turbines, or at least to provide the public with the useful alternative.

### Summary of the invention

According to the invention there is provided herein a wind turbine structure comprising a vertical core
a rotor support frame rotatably located about the core and having at least two radially extending arms, and
a pair of propeller-type rotors located respectively at distal ends of the radially extending arms.

Preferably, the vertical core comprises concentric inner and outer circular walls having a void between the inner and outer walls.

Preferably, the wind turbine structure further comprises a plurality of vertical nibs within the void and connecting the inner and outer walls.

Preferably, the inner circular wall defines a generally hollow central void within the core.

Preferably, the rotor support frame is rotatably supported on annular roller tracks located about the core.

Preferably, the rotor support frame is rotatably supported at upper and lower positions on upper and lower annular roller tracks located about the core.

Preferably, the rotor support frame is freely rotatable about the core.

Preferably, each one of the propeller-type rotors is connected with its own electric generator.

Preferably, there is an electric generator driven by each one of the propeller-type rotors.

Preferably, each of the propeller-type rotors comprises two layers of blades.

Preferably, a first layer of the two layers of blades rotates in a first direction and a second layer of the two layers of blades rotates in a opposite direction.

Preferably, the diameters of the two layers of blades are substantially the same.

Preferably, the number of blades of the two layers of blades are different.

Preferably, the wind turbine structure further comprises a wind deflector located on the rotor support frame for deflecting wind towards the propeller-type rotors.

Preferably, the wind deflector comprises a generally central leading edge and a pair of deflecting surfaces extending away from the leading edge towards the tips of the propeller-type rotors.

Preferably, the wind deflector extending vertically to a height substantially equal to that of the propeller-type rotors.

Preferably, the surfaces of the wind deflector are flat or concave.

Preferably, the wind turbine structure further comprises two or more rotor support frames located one above the other for independent rotation about the core.

Further features and aspect of the invention are disclosed in the following description, which are given by way of example only, and is not intended to limit the scope of use or functionality of the invention.

### Brief description of the drawings

An exemplary form of the present invention will now be described by way of example only and with reference to the accompanying drawings, in which:

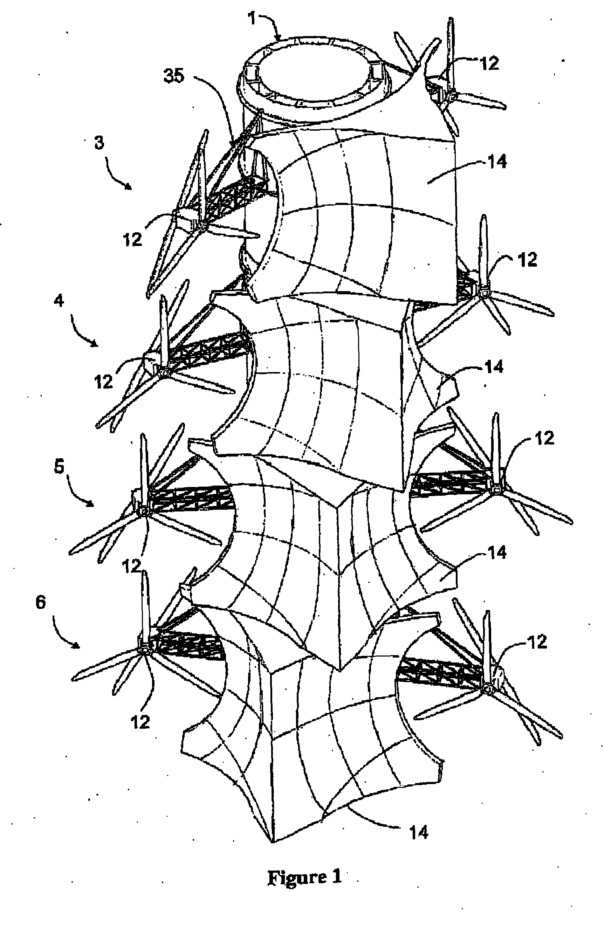

Figure 1 is a perspective illustrative view of a wind turbine structure according to the invention,

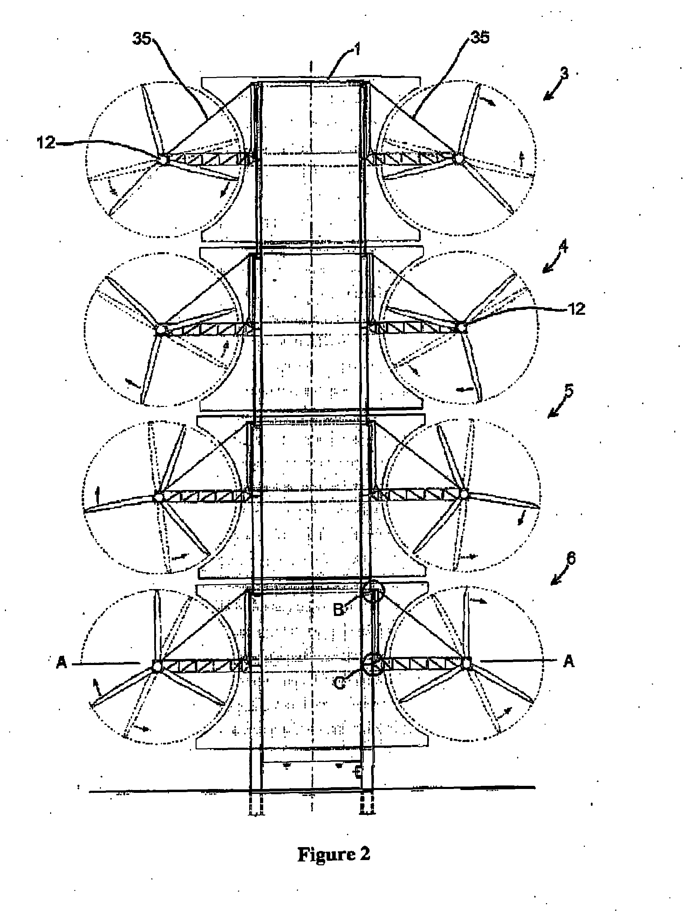

Figure 2 is elevation illustrative view of the wind turbine structure of Figure 1,

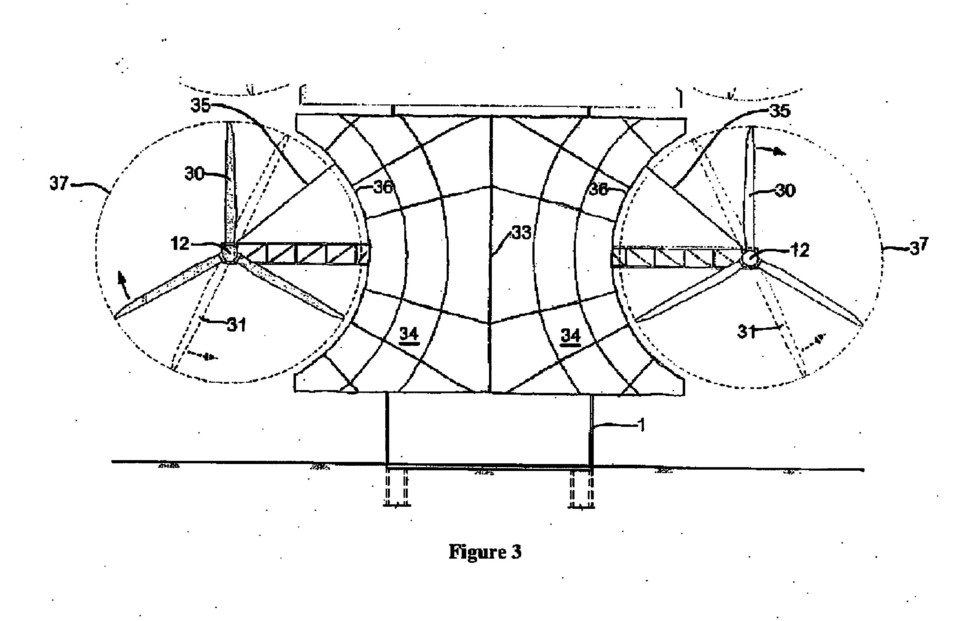

Figure 3 is elevation illustrative view of a single stage of the wind turbine of Figure 1,

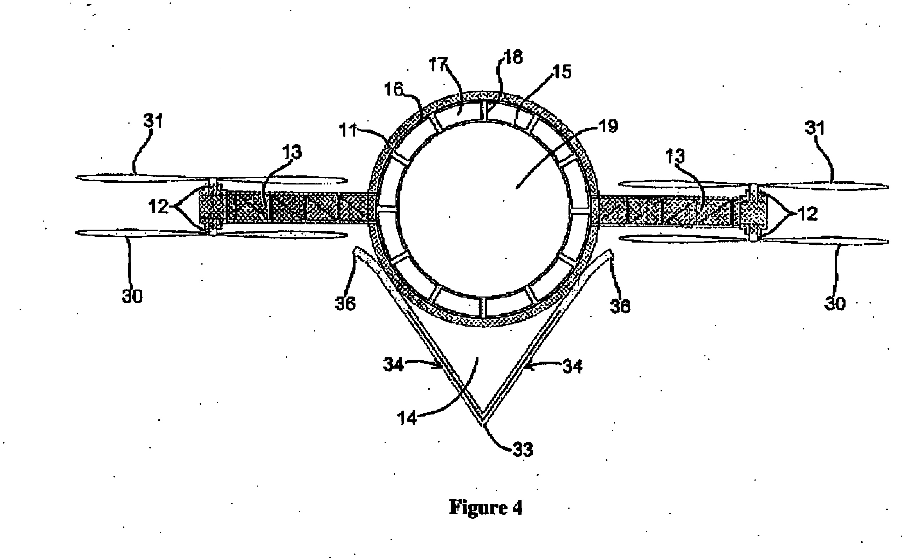

Figure 4 is a section plan illustrative view through A-A of Figure 2,

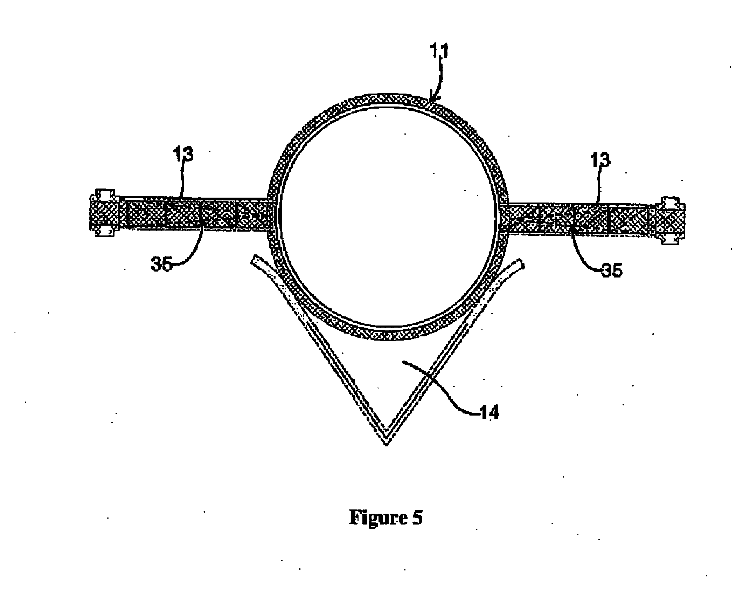

Figure 5 is a section plan illustrative view of a rotor support frame,
Figure 6 is a detailed illustrative view of areas B and C of Figure 2 (corbel option),
Figure 7 is a detailed illustrative view of areas B and C of Figure 2 (wall ledge option),

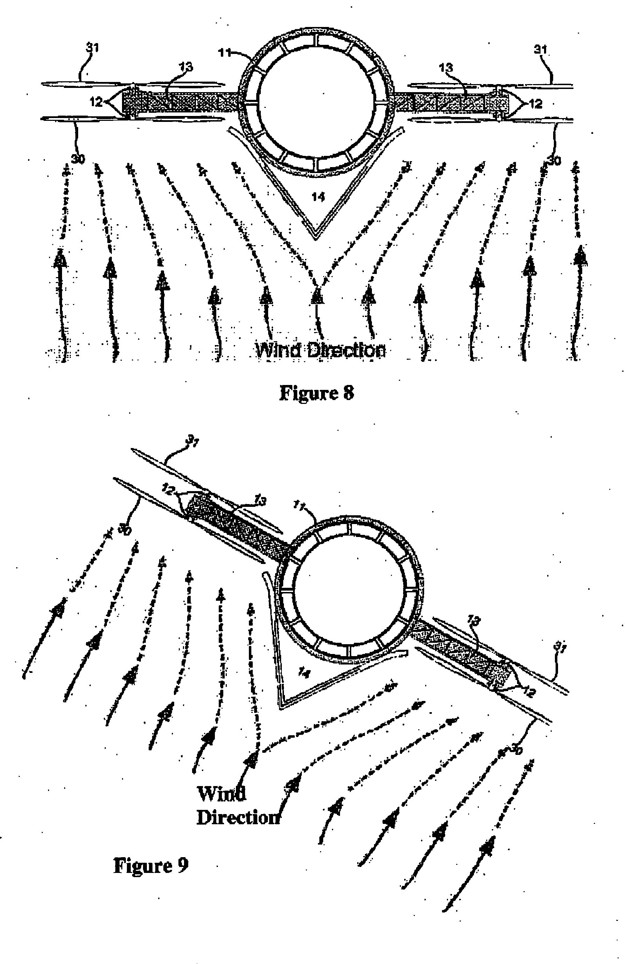

Figure 8 illustrates effect of a wind deflector at a first wind direction, and
Figure 9 illustrates effect of a wind deflector with the rotor turned to a second wind direction.

### Detailed description of the preferred embodiments

The invention will now be described as practiced in a large size, i.e. tall building sized, multi-stage wind turbine structure. The design of the wind turbine structure is such that it can be made to a very large size and in particular much larger than known wind turbines. Hitherto the largest wind turbines are horizontal axis wind turbines having a blade diameter of up to 126 meters. By large scale the inventors intend that a wind turbine structure according to the invention could have an overall width of up to 350 meters and a vertical height of up to 500 meters or higher. This is, however, not intended to limit the use or functionality of the invention and a skilled addressee will appreciate that principles of the invention can be applied to a wind turbine structure of any size, big or small.

Because a wind turbine structure according to the invention can be made to such a large scale it can capture a large area of wind at greater heights where wind velocity is generally higher. The power (P) potentially available in the wind is given by ½ ρ A v³ where ρ is the density of air, A is the swept area of the turbine rotor, and v is the velocity of wind. Therefore, the amount of power generated by a wind turbine increases proportionally to the area swept out by its rotors, and increases to the cubic power of wind speed. Being up to 350 meters wide and having a plurality of rotors the wind turbine structure presents a large catchment area to the wind Being able to reach heights of 500 meters or more means that the wind turbine structure is exposed to winds of higher velocity and thus a wind turbine structure according to the invention is able to tap greater power generation potential of the wind.

Construction of a wind turbine structure of the size refereed to above may use well known building construction and large scale engineering techniques. Numerous tall building of up to 500 meters or more have been constructed in most countries of the world and the building and construction techniques for such structures are easily within the know-how of the skilled addressee. The individual structural elements and features of the wind turbine structure described herein lend themselves to such known construction techniques.

The apparatus of the preferred embodiment is "multi-stage" in that a plurality of independent rotor support frames, each frame consisting of a carousel connected to radial arms that support a pair of propeller-type rotors, are stacked vertically about a common vertical core. As the wind turbine structure extends to a height of several hundred meters it experiences different wind directions and velocities at different levels through its height Each rotor support frame is free to rotate in response to the wind that it experiences independently at different levels which may be experiencing different wind conditions. However, the wind turbine structure may be made to have just a single rotor support frame.

The accompanying figures depict a multi-stage wind turbine structure according to the invention. Although not critical to the invention in terms of scale, the large size wind turbine structure has an overall width of 350 meters and a height of up to 500 meters. The structure comprises a cylindrical central core 1 about which there is located four rotor stages 3, 4, 5, 6 stacked one above the other. Each rotor stage comprises a rotor support frame consisting of a carousel 11 rotationally located about the vertical core structure 1 and two opposed arms 13 extending radially from either side of the carousel 11. A pair of horizontal axis propeller-type rotors 12 is located on the outer distal ends of the arms 13. An optional wind deflector 14 may be located on the, in operation, up-wind side of the rotor support frame for deflecting wind away from the center of the structure and towards the propeller-type rotors 12.

The vertical core 1 comprises a vertically extending cylindrical tower forming the core of the wind turbine structure. The diameter of the core tower is governed by structural stability requirements and typically has a diameter of between 15% and 40% of the total wind turbine structure width. In the preferred embodiment the diameter of the core tower is 25% of the wind turbine structure width and so for a wind turbine structure having a width of 350 meters the diameter of the core tower is 88 meters. The core tower 1 extends the full height of the wind turbine structure and is capped with a roof that is flat, pitched or domed. The core tower is constructed with concentric inner and outer circular walls 15, 16 having a void 17 between them. A plurality of ribs 18 extend vertically within the void 17 at spaced apart circumferential locations connecting the inner wall 15 and outer wall 16. The vertical ribs 18 separate the void 17 between the walls into a plurality of cells. In the preferred embodiment the distance between the inner wall 15 and outer wall 16 is several meters providing sufficient room for a lift shaft, stairwell and machine room all within the wall void 17. The area within the inner wall 15 of the core is generally hollow creating a large central void 19 within the core 1. The core tower is typically made from reinforced concrete and may be constructed using known construction techniques. The double wall cellular structure of the core tower gives the tower strength to withstand large lateral forces generated by wind.

Each stage 3, 4, 5, 6 of the wind turbine structure includes a rotor support frame located and freely rotatable about the core tower 1. The rotor support frame, which is rotatably located about the core, comprises an annular carousel 11 and at least two arms 13 extending radially. Preferably the radial arms 13 are supported by stay tie members 35. At the distal ends of each radial extending arm 13 is a generally propeller-type rotor 12.

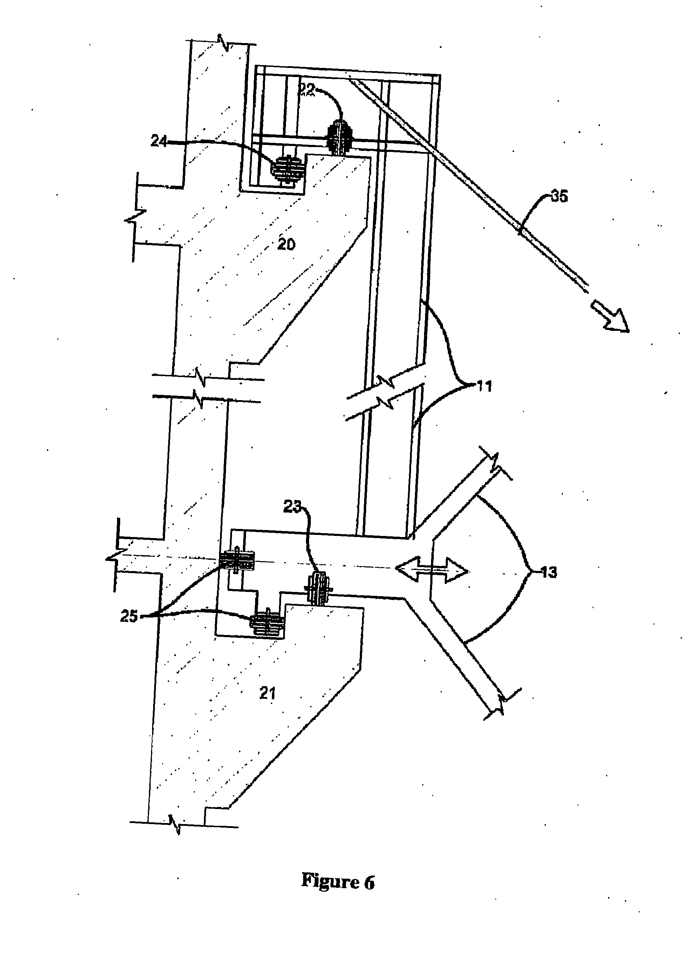

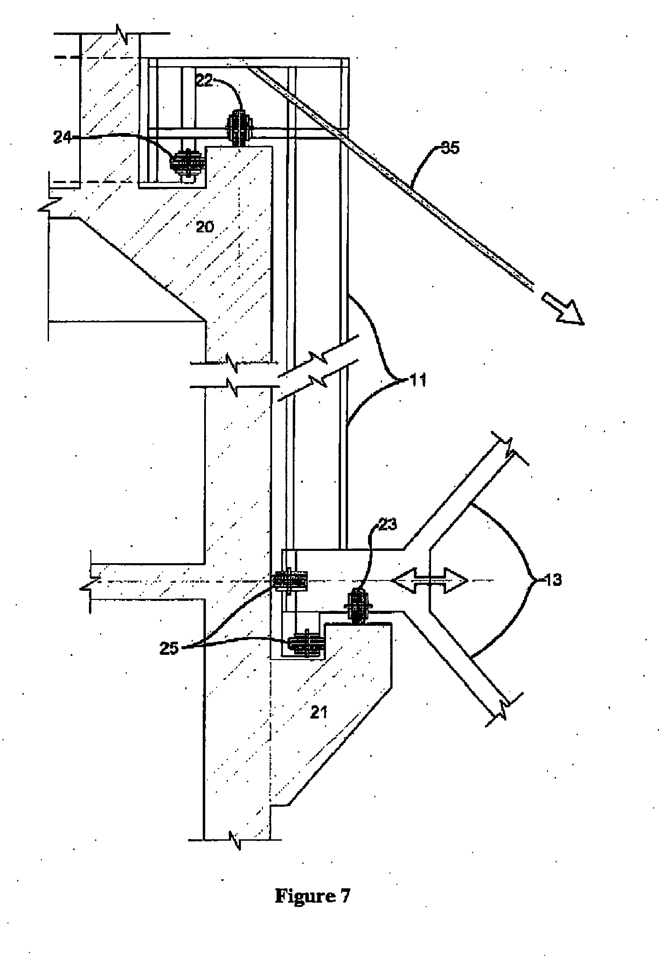

The carousel 11 is rotationally located about the core 1 on upper and lower annular roller tracks 20, 21 located about the outer periphery of the core tower as depicted by the section illustration in Figure 6 and 7. Roller tracks can be placed on corbels extending from the vertical core as illustrated in Figure 6, or the vertical core can have a plurality of sections with different diameters to form ledges for the roller tracks as illustrate in Figure 7. The carousel 11 is supported by wheels or rollers 22, 23 that travel on the surfaces of the upper and lower roller tracks 20, 21. Horizontal thrust rollers 24, 25 are also provided to run against the outer periphery of the core tower. The upper and lower roller tracks support each carousel 11 at a top and bottom location.

The carousel 11 is required to freely rotate about the center core 1 in order to point the propeller-type rotors 12 into the prevailing wind. Each rotor support frame may be turned into the prevailing wind direction by a guide vane (not shown) or a motorised system at the roller tracks 20 and/or 21.

The propeller-type rotors 12 located on the distal end of each rotor arm 13 are conventional horizontal axis wind power generation units which are well known in the art. In the preferred embodiment, each of the propeller-type rotors 12 consists of two layers of blades. The one layer of blades 30 is at the front of rotor 12 and the other layer of blades 31 is at the back of the rotor 12. The shape of the blades is conventional. The diameters of two layers of blades 30, 31 are substantially the same, which in the preferred embodiment is 1.5 times the core diameter. Preferably the number of blades of one layer of blades 30 is not the same as that of the other layer of blades 31. In the preferred embodiment the front layer of blades 30 comprises 3 blades and the back layer of blades 31 comprises 2 blades. The front and back blades 30, 31 are connter-rotating when the wind blows through the rotors 12. However, this two layer configuration of blades is not essential to the invention and in an alternative embodiment there may be rotors consisting of one layer of propeller-type blades only.

The presence of the vertical core 1 acts as a natural wind deflector to channel incoming wind towards the pairs of propeller-type rotors 12. Therefore, a wind turbine structure according to the invention can achieve greater power generation efficiency. However, in the preferred embodiment, each section of the wind turbine structure further comprises a wind deflector 14 for deflecting wind towards the propeller-type rotors 12. The wind deflector 14 is located on the rotor support frame and rotates together with the whole frame. The wind deflector has a generally central leading edge 33 and a pair of deflecting surfaces 34 extending away from the leading edge 33 towards the propeller-tyge rotors 12. The trailing edges 36 of the wind deflecting surfaces 34 are concave to match the path 37 of the blade tips in the propeller-type rotors 12. In the preferred embodiment the deflecting surfaces 34 are also concave from the leading edge 33 towards the trailing edges 36 to provide a smooth transition from the straight leading edge to the concave trailing edges.

Preferably the wind deflector is made of lightweight, durable material such as thin sheet metal, sailcloth, tarpaulin fabric, fibre glass or high rigidity plastic etc.

There has been described herein an embodiment of a large size wind turbine according to the invention. Various features and elements of the structure, rotors and wind deflectors have been described which are known in the art to have structural or functional equivalents. It is envisaged that those in the art will readily see how such functional or structural equivalent can be incorporated into the invention and so the particular embodiment described herein is not intended to limit the use or function of the invention.

## Claims

1. A wind turbine structure, comprising
a vertical core
a rotor support frame rotatably located about the core and having at least two radially extending arms, and
a pair of propeller-type rotors located respectively at distal ends of the radially extending arms.

2. The wind turbine structure of claim 1 wherein the vertical core comprises concentric inner and outer circular walls having a void between the inner and outer walls.

3. The wind turbine structure of claim 2 further comprising a plurality of vertical ribs within the void and connecting the inner and outer walls.

4. The wind turbine structure of claim 2 wherein the inner circular wall defines a generally hollow central void within the core.

5. The wind turbine structure of any preceding claim wherein the rotor support frame is rotatably supported on annular roller tracks located about the core.

6. The wind turbine structure of claim 5 wherein the rotor support frame is rotatably supported at upper and lower positions on upper and lower annular roller tracks located about the core.

7. The wind turbine structure of claim 6 wherein the rotor support frame is freely rotatable about the core.

8. The wind turbine structure of any preceding claim wherein each one of the propeller-type rotors is connected with its own electric generator.

9. The wind turbine structure of claim 8 wherein there is an electric generator driven by each one of the propeller-type rotors.

10. The wind turbine structure of any preceding claim therein each of the propeller-type rotors comprises two layers of blades.

11. The wind turbine structure of claim 10 wherein a first layer of the two layers of blades rotates in a first direction and a second layer of the two layers of blades rotates in a opposite direction.

12. The wind turbine structure of claim 10 wherein the diameters of the two layers of blades are substantially the same.

13. The wind turbine structure of claim 10 wherein the number of blades of the two layers of blades are different.

14. The wind turbine structure of any preceding claim further comprising a wind deflector located on the rotor support frame for deflecting wind towards the propeller-type rotors.

15. The wind turbine structure of claim 14 wherein the wind deflector comprises a generally central leading edge and a pair of deflecting surfaces extending away from the leading edge towards the tips of the propeller-type rotors.

16. The wind turbine structure of claim 15 wherein the wind deflector extending vertically to a height substantially equal to that of the propeller-type rotors.

17. The wind turbine structure of claim 15 wherein the surfaces of the wind deflector are flat or concave.

18. The wind turbine structure of any preceding claim further comprising two or more rotor support frames located one above the other for independent rotation about the core.

19. The wind turbine structure as herein described with reference to the drawings.

20. The wind turbine structure as herein described with reference to figure 1.
